# DEMANDE DE BREVET EUROPEEN

(11) **EP 0 889 247 A2**
(43) Date de publication de la demande: **07.01.1999**
(21) Numéro de dépôt: 98202033.1
(22) Date de dépôt: 17.06.1998
(51) Int. Cl.: F16B 5/06

(54) **Agrafe de fixation de deux feuillards métalliques superposés ou d'un groupe de feuillards métalliques devant être reliés entre eux**

(30) Priorité: 27.06.1997 ES 9701553
(71) Demandeur: MIKALOR, S.A., 08205 Sabadell (Barcelona) (ES)
(72) Inventeur: Dominguez, Ramon Palau Mikalor S.A., 08205 Sabadell (Barcelona) (ES)
(74) Mandataire: Canela Giménez, Teresa

(57) **Abrégé**

Agrafe de fixation de deux feuillards métalliques superposés ou d'un groupe de feuillards devant être reliés entre eux, en que la fixation des feuillards superposés est obtenue par l'action simultanée d'accrochage, de butée et d'expansion des bras élastiques (2,3) composant l'agrafe, constituée à partir d'un feuillard métallique en acier trempé frappé et estampé, pour son façonnage, qui comporte un plateau horizontal plan (1), à partir des bords duquel descendent une pluralité de paires de bras (2,3,4,5) opposés entre eux, dont une paire de ces bras étant inclinés et ayant des parties extrêmes coudées de telle façon que, lorsque l'agrafe est introduite dans les ouvertures des deux feuillards superposés, il se produise une compression des bras érectiles (2,3,4,5) pour permettre leur passage à travers les ouvertures des deux feuillards superposés, et qu'une fois l'introduction réalisée, les bras élastiques se détendent en produisant la fixation de l'agrafe.

## Description

La présente invention concerne une agrafe de fixation de deux feuillards métalliques superposés ou d'un groupe de feuillards devant être reliés entre eux.

On connaît déjà des dispositifs de ce genre qui sont disponibles sur le marché.

L'organisation constructive de ces dispositifs est généralement basée sur le fait que la fixation réalisée par accrochage des bords d'ouvertures alignées qui sont pratiquées dans deux feuillards métalliques superposés devant être reliés entre eux, au moyen du dispositif introduit dans ces ouvertures.

Tel est par exemple le cas du dispositif suivant le brevet espagnol N°9700985 et aussi de celui du brevet espagnol N°9501334 appartenant également à la demanderesse.

L'agrafe de fixation suivant la présente invention fonctionne avec la combinaison simultanée de trois systèmes à savoir par accrochage, par expansion élastique de l'agrafe du dispositif et par butée, en bénéficiant simultanément, de cette façon, des avantages de l'action de retenue de ces systèmes et en obtenant de ce fait une meilleure fixation et un coût de fabrication moindre.

Pour en avoir une interprétation correcte, on décrira dans ce qui va suivre un exemple de réalisation pratique, à titre d'exemple non limitatif, de l'agrafe de fixation A suivant la présente invention, en référence aux plans des dessins annexés sur lesquels :

La figure 1 est une vue en perspective de l'agrafe élastique suivant la présente invention, cette agrafe étant alignée avec deux feuillards devant être reliés entre eux représentés l'un au-dessus de l'autre mais en étant séparés l'un de l'autre.

La figure 2 est une vue en coupe de l'agrafe élastique suivant la figure 1, avec les deux feuillards superposés à relier non encore accouplés l'un à l'autre.

La figure 3 est une vue en coupe faite dans un plan perpendiculaire à celui de la figure 2 avec les deux feuillards à relier superposés et se touchant l'un l'autre.

La figure 4 est une vue en perspective d'une agrafe élastique dans laquelle la butée de soutien du feuillard métallique inférieur est réalisée sous la forme d'un socle circulaire.

La figure 5 est une vue en perspective d'une agrafe élastique suivant la présente invention comportant deux paires de bras laminaires élastiques descendants, de forme inclinée, les deux paires étant juxtaposées l'une à l'autre, la butée étant réalisée dans ce cas sous la forme d'un socle rectangulaire.

Les figures 6 et 7 sont des vues en plan des agrafes représentées respectivement sur les figures 4 et 5.

La figure 8 est une vue en coupe d'une agrafe montrant une paire de bras élastiques descendants et permettant de voir leur disposition ainsi que la façon dont agissent les coudes de chaque paire de bras élastiques opposés.

La figure 9 est une vue représentant la même agrafe élastique que celle de la figure 8 avec les bras élastiques descendants non représentés en coupe, cette vue montrant latéralement deux des bras disposés alternativement et permettant de comprendre, d'une façon la plus claire possible, comment ils agissent, l'un des bras présentant un coude simple et l'autre un coude double avec un prolongement rectiligne s'étendant vers le bas.

L'agrafe A du dispositif de fixation suivant la présente invention est réalisée à partir d'une lame métallique comportant un noyau laminaire central 1, rectangulaire et plan, formant un plateau, à partir des côtés duquel s'étendent, vers le bas, deux paires de bras minces parmi lesquels une paire de bras 2 et 3, élastiques, agissent en tant que verrous par expansion en étant coudés sous une forme érectile dans le sens de la longueur de l'axe géométrique de l'agrafe.

Le plateau 1 et les bras descendants 2,3,4,5 sont obtenus en une seule opération de frappe et d'estampage à partir d'un feuillard métallique en acier trempé.

Les bras élastiques descendants, de forme rectiligne et inclinés vers l'extérieur, sont disposés en étant opposés dos à dos.

Les parties extrêmes inférieures des bras élastiques descendants 2 et 3 sont recourbées suivant un angle obtus 6 suivant une direction inclinée vers l'axe géométrique de l'agrafe, sans atteindre cet axe.

L'agrafe élastique A est pourvue d'une butée de limitation de l'introduction des extrémités venant en prise avec les deux feuillards métalliques superposés ou le groupe de feuillards devant être reliés entre eux. La butée de limitation d'introduction de l'exemple représenté sur les figures là 3 est formée au moyen de deux des bras descendants opposés 4,5 qui sont plus large à leurs extrémités inférieures et dont chacun présente, à proximité de son extrémité inférieure, deux petits bras transversaux 7,8 et 7',8' formant une croix.

Au centre de la partie extrême de ces prolongements est formée une ouverture carrée 9,10 par découpe de trois de ses côtés, en forme de U, de la matière de la partie extrême, tandis que le quatrième côté du carré reste non coupé, en déterminant une ligne de liaison de la languette en forme de U inversé qui est rabattue partiellement à l'intérieur vers l'axe géométrique de l'agrafe élastique, sans atteindre cet axe, en formant des ergots d'accrochage en saillie 11,12 inclinés, internes.

Dans la surface du feuillard métallique inférieur 16 parmi les deux feuillards superposés devant être reliés entre eux sont formées deux fentes parallèles 13,14. Dans ces fentes s'engagent respectivement les parties extrêmes des deux bras descendants opposés 4,5 de l'agrafe, l'introduction de ces bras vers le bas étant limitée par les petits bras respectifs 7,8 et 7',8' qui s'étendent au-delà de la longueur de chaque fente respective 13,14.

Chaque ergot d'accrochage 11,12 vient en prise avec les bords des fentes latérales parallèles respectives 13,14 du feuillard inférieur 16.

De cette façon, l'agrafe élastique A ne peut pas être introduite dans son logement, par suite de la butée de retenue réalisée sous la forme décrite, au-delà de la position prévue, en en étant empêchée par les petits bras formant une croix 7,8 et 7',8' qui limitent son mouvement de descente, la venue en butée et l'accrochage des ergots 11 et 12 empêchant le dégagement des bras ainsi immobilisés.

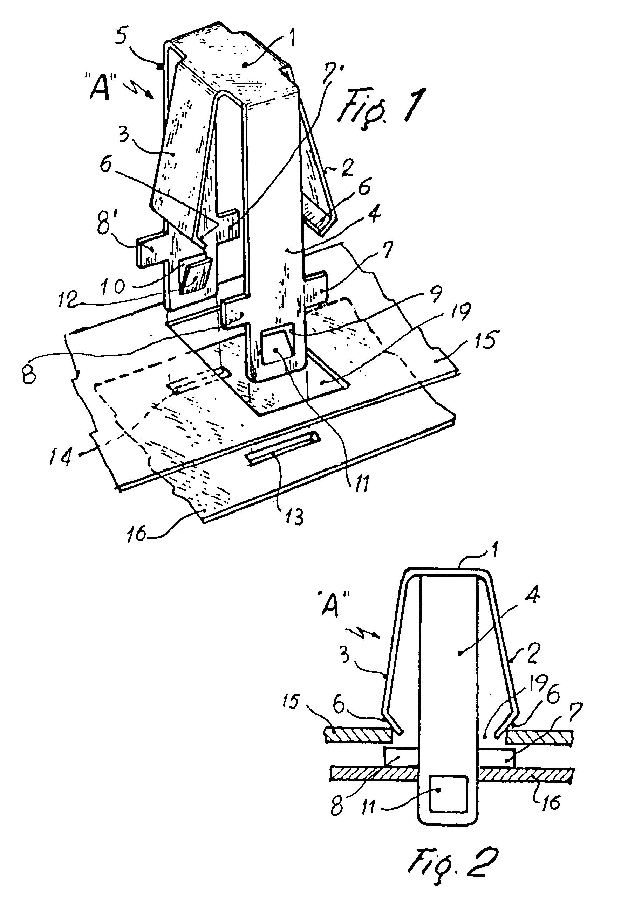

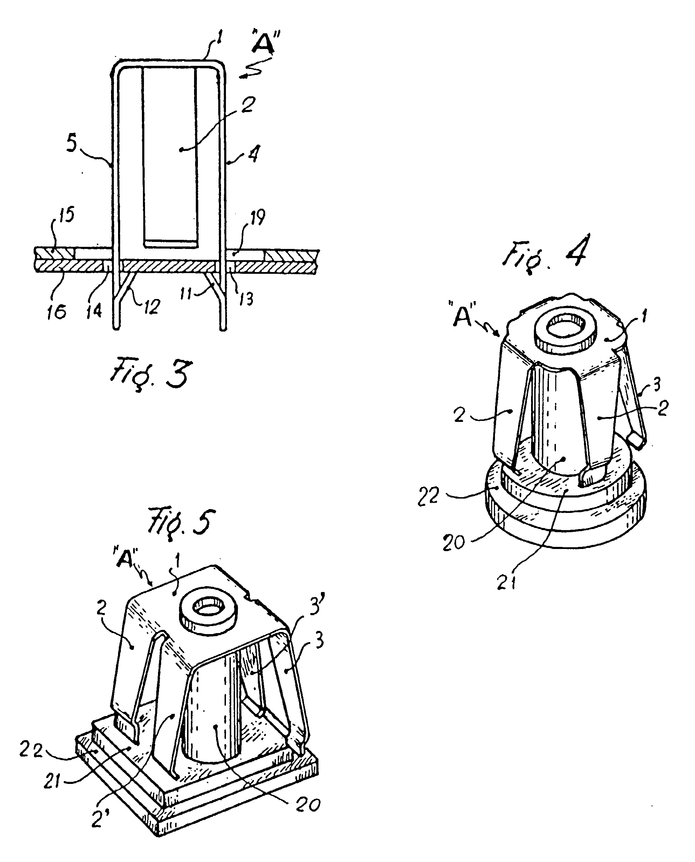

Quant l'agrafe élastique A du dispositif de fixation a été insérée dans les fentes précitées, la paire de bras élastiques descendants 2,3, inclinés, aux extrémités coudées, s'ouvrent à leur tour par expansion (figure 2) et viennent en appui contre deux points opposés de l'ouverture 19 du feuillard supérieur superposé 15, en bloquant celui-ci.

Pour pouvoir effectuer l'insertion de l'agrafe élastique A dans les ouvertures correspondantes des deux feuillards superposés et accolés, les bras élastiques expansifs 2,3 se compriment momentanément en direction l'un de l'autre et une fois l'agrafe A insérée, ces bras élastiques, libérés de la pression exercée, se détendent et prennent appui, par leurs extrémités inférieures, contre la surface de la paroi verticale du bord de l'ouverture 19 du feuillard supérieur 15 parmi les deux feuillards superposés 15 et 16.

Dans le cas de réalisations pratiques pour lesquelles on désire obtenir une agrafe élastique A plus résistante à l'égard d'une action de compression verticale négative qui peut se produire sur le plateau horizontal 1 de l'agrafe élastique A, on dispose, à l'intérieur de l'agrafe et suivant son axe géométrique, une colonne verticale d'appui 20 pourvue d'un socle-butée inférieur en saillie 21, cette butée remplaçant la butée constituée par les petits bras 7,8 et 7',8' des deux bras descendants 4,5 et les ergots d'accrochage 11,12.

Dans ce cas, les deux feuillards superposés devant être reliés entre eux présentent des ouvertures d'insertion de l'agrafe qui sont alignées et coïncident du point de vue forme.

Le socle-butée inférieur en saillie présente, à sa périphérie, un gradin continu 22 sur lequel prend appui le bord porteur de l'ouverture du feuillard métallique inférieur 16 parmi les deux feuillards superposés 15,16 devant être reliés entre eux.

Dans ce cas, chaque paire de bras élastiques descendants 2,3, à parties extrêmes inférieures coudées, présente des coudes qui sont situés à un niveau de hauteur différent l'un par rapport à l'autre, le coude situé au niveau le plus élevé étant à son tour coudé et prolongé par un tronçon rectiligne descendant 23.

La partie extrême coudée simple 6, sans le tronçon de prolongement rectiligne final 23, fonctionne de la manière décrite précédemment à propos du coude simple de l'exemple antérieur. Au contraire, la partie extrême du bras élastique qui présente un double coude inférieur et le tronçon de prolongement rectiligne descendant 23, fonctionne suivant une action d'expansion et d'accrochage et elle assure simultanément l'appui du tronçon rectiligne contre la paroi verticale 19 de l'ouverture du feuillard supérieur 15 dans laquelle il se trouve encastré, en évitant ainsi le déplacement latéral du feuillard supérieur 15 par rapport au feuillard inférieur 16.

En plus de la retenue par une action d'expansion des bras élastiques aux parties extrêmes coudées on obtient également la fixation additionnelle simultanée, par butée et accrochage, de l'ergot de retenue 11,12 contre le bord inférieur de l'ouverture correspondante du feuillard métallique inférieur 16 parmi les deux feuillards superposés 15,16 devant être reliés entre eux.

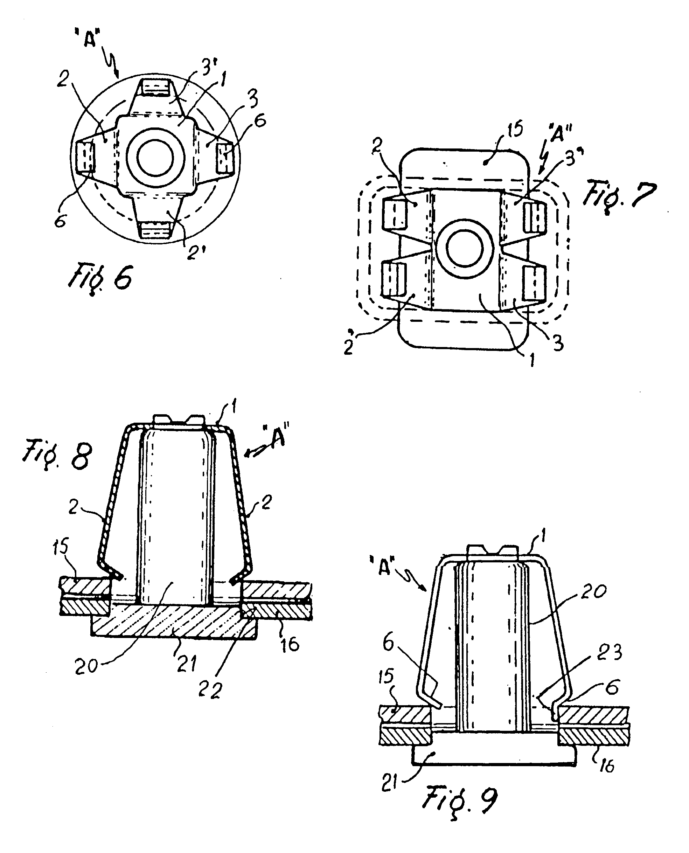

Pour la commodité de la liaison à obtenir, chaque paire de bras descendants qui forment l'agrafe élastique A est prévue en double, les deux paires étant juxtaposées et formant une seule pièce (figure 5), et l'action de ces bras est la même que dans le cas de la forme détaillée dans l'exemple antérieur. Cependant, les parties extrêmes de chaque paire de bras juxtaposés sont disposées de telle façon que l'action de chaque paire s'effectue en diagonale et pour cela, l'ordre des emplacements des coudes simples et des coudes doubles est modifié, en disposant deux coudes simples d'un côté et deux coudes doubles de l'autre côté.

Sur la figure 5 le socle-butée de la colonne 20 sur lequel les coudes sont disposés en diagonale, a une forme rectangulaire conforme à celle de l'agrafe élastique A.

Dans l'exemple d'agrafe élastique à socle-butée, (figures 4,5 et 8,9), l'agrafe A est introduite à partir de la partie inférieure, à travers les deux ouvertures alignées 19, de même forme, des deux feuillards 15,16 superposés devant être reliés entre eux, ouvertures avec lesquelles le socle-butée vient s'aligner. Simultanément, les bras élastiques laminaires, s'étendant vers le bas, sont pressés l'un contre l'autre, en se rapprochant, et, une fois l'agrafe élastique A insérée, ces bras élastiques sont libérés et s'étendent simultanément, de la même façon que dans les exemples représentés sur les figures 2,8 et 9, en venant appuyer contre les bords des ouvertures d'introduction, de la façon décrite antérieurement.

Dans l'exemple du socle-butée rectangulaire de la figure 5, on aligne le socle, avant l'introduction de l'agrafe élastique, avec l'ouverture rectangulaire de chaque feuillard métallique 15,16 à relier et, une fois cette introduction réalisée, on fait tourner le socle de 90° de telle façon que ce socle s'étende en travers de l'ouverture du feuillard inférieur 16, en restant dans cette position assemblée et en assumant en outre la fonction de butée d'introduction.

Il est bien entendu que dans le cas présent, on peut prévoir diverses variantes des détails de construction et de finition sans altérer, changer ou modifier l'essence de l'invention.

## Revendications

1. Agrafe de fixation de deux feuillards métalliques superposés ou d'un groupe de feuillards devant être reliés entre eux caractérisée en ce que la fixation des feuillards superposés est obtenue par l'action simultanée d'accrochage, de butée et d'expansion des bras élastiques composant l'agrafe, constituée à partir d'un feuillard métallique en acier trempé frappé et estampé, pour son façonnage, qui comporte un plateau horizontal plan, à partir des bords duquel descendent, par pliage, une pluralité de paires de bras opposés entre eux, dont au moins une paire de bras sont élastiques, ces bras étant inclinés et ayant des parties extrêmes coudées de telle façon que, lorsque l'agrafe mise en forme est introduite dans les ouvertures des deux feuillards superposés à relier entre eux, il se produise une compression des bras érectiles pour permettre leur passage à travers les ouvertures des deux feuillards superposés ou du groupe de ces feuillards, et qu'une fois l'introduction réalisée, les bras élastiques se détendent en produisant la fixation de l'agrafe par des actions simultanées d'accrochage, d'expansion et de butée de ses éléments de retenue et que par suite de la triple action de fixation, le feuillard supérieur soit lié au feuillard inférieur.

2. Agrafe de fixation de deux feuillards métalliques superposés ou d'un groupe de feuillards devant être reliés entre eux suivant la revendication 1 caractérisée en ce que les coudes des parties extrêmes inférieures d'une paire de bras élastiques sont différents en ce que l'un des coudes agit en tant que moyen d'assemblage tandis que le coude de l'extrémité du bras élastique opposé agit en plus, simultanément, comme guide d'introduction dans l'ouverture correspondante et comme butée pour éviter le décalage latéral du feuillard supérieur par rapport au feuillard inférieur, et à cet effet la partie extrême du coude différent est constituée par le coude normal situé à un niveau plus haut que celui du coude du bras opposé et le coude situé à un niveau plus haut est suivi d'un second coude prolongé par un tronçon rectiligne final vertical qui exerce une pression en un endroit de la paroi verticale de l'ouverture du feuillard supérieur devant être relié.

3. Agrafe de fixation de deux feuillards métalliques superposés ou d'un groupe de feuillards devant être reliés entre eux suivant les revendications précédentes caractérisée en ce que dans les cas de charges négatives excessives possibles pouvant être appliquées sur le plateau de l'agrafe et pour éviter que l'agrafe ne s'écrase sous un excès de pression, on prévoit, suivant l'axe géométrique interne de l'agrafe élastique, une colonne verticale dont l'extrémité supérieure est unie, par des moyens appropriés, à la surface interne du plateau de l'agrafe, la colonne comportant un socle-butée d'introduction solidaire qui comporte, à sa périphérie, un gradin continu sur lequel prend appui le bord de l'ouverture du feuillard inférieur des deux feuillards devant être reliés.

4. Agrafe de fixation de deux feuillards métalliques superposés ou d'un groupe de feuillards devant être reliés entre eux suivant les revendications précédentes caractérisée en ce que le socle-butée est indifféremment rectangulaire ou circulaire, en accord avec la disposition des bras descendants de l'agrafe élastique, opposés dos à dos ou aussi opposés mais cependant suivant une ligne en diagonale, les deux paires de bras étant juxtaposées.
